# EUROPÄISCHE PATENTSCHRIFT

(11) **EP 1 382 093 B1**
(45) Veröffentlichungstag und Bekanntmachung des Hinweises auf die Patenterteilung: **09.02.2005**
(21) Anmeldenummer: 02737784.5
(22) Anmeldetag: 11.04.2002
(51) Int. Cl.: H01R 13/58

(54) **KLEINBAUENDER KUPPLUNGSSTECKER, INSBESONDERE FÜR EINE PLANARE BREITBAND-LAMBDA-SONDE MIT EINEM STAUBSCHUTZ IN EINER VORRASTSTELLUNG**
COMPACT COUPLER PLUG, PARTICULARLY FOR A PLANAR BROADBAND LAMBDA PROBE, THAT IS PROTECTED FROM DUST WHEN IN A PRE-LOCKING POSITION
FICHE DE COUPLAGE COMPACTE NOTAMMENT DESTINEE A UNE SONDE LAMBDA A BANDE LARGE PLANE COMPORTANT UNE PROTECTION ANTIPOUSSIERE DANS UNE POSITION DE PRE-ENCLENCHEMENT

(30) Priorität: 19.04.2001 DE 20106747 U
(43) Veröffentlichungstag der Anmeldung: 21.01.2004
(73) Patentinhaber: ROBERT BOSCH GMBH, 70442 Stuttgart (DE)
(72) Erfinder: PADE, Wolfgang, 75428 Illingen (DE)
(86) Internationale Anmeldenummer: PCT/DE2002/001353
(87) Internationale Veröffentlichungsnummer: WO 2002/087026

(56) Entgegenhaltungen:
- US-A- 6 132 256
- US-A- 6 146 198
- US-B1- 6 217 394

## Beschreibung

Die Erfindung betrifft einen Kupplungsstecker, insbesondere für eine planare Lambda-Sonde, bestehend aus
- einem Gehäuse, nämlich einem Grundkörper und einem Deckelelement sowie
- elektrischen Bauteilen, die in das Gehäuse einlegbar und fixierbar sind, und
- einem Abgleichelement für eine Sonde, insbesondere eine planare Breitband-Lambdasonde, die in dem Kupplungsstecker oder über ein weiteres Kontaktelement ausserhalb des Kupplungssteckers anzubringen ist, wobei
- das Deckelelement über dem Abgleichelement aufsteckbar ist und eine Primär- (Vorraststellung) und eine mit dem Deckelement zusammenwirkende Sekundärverriegelung (Endlage) aufweist.

### Stand der Technik

Kupplungsstecker der vorstehenden Art sind in der Regel für die Verbindung zwischen einem Kabelbaumstecker und einer Lambda-Sonden ausgebildet, wobei die Anschlüsse, die im Kupplungsstecker vorgesehen sind, für Abgleich, Signal und/oder Heizung der Sonde vorgesehen sind. Die Lambda-Sonde und die Lambda-Regelung stellen heute in Verbindung mit dem 3-Wege-Katalysator ein wirksames Abgasreinigungsverfahren dar. Die Lambda-Sonde, die beispielsweise in ein Abgassystem eingeschraubt wird, umfasst einen Messfühler zur Feststellung des Sauerstoffgehalts im Abgas.

Der Restsauerstoffgehalt eignet sich sehr gut als Messgrösse und regelt das Luft-Kraftstoff-Verhältnis, da dieser präzise anzeigt, ob das Luft-Kraftstoff-Gemisch vollständig verbrennt.

Die Lambda-Sonde liefert dabei ein Spannungssignal, das den augenblicklichen Wert der Gemischzusammensetzung repräsentiert und den Gemischänderungen folgt. Die Kraftstoffzufuhr zum Motor wird durch eine Gemischaufbereitungsanlage entsprechen dem Signal der Lambda-Sonde derart geregelt, das ein stöchiometrisches Luft-Kraftstoff-Verhältnis λ=1 erreicht wird. Je nach Ausführungen des Abgassystems und dem Einsatzbedingungen werden beheizte oder unbeheizte Sonden eingesetzt. Weitere Anwendungen findet die Lambda-Sonde ausserhalb von Kraftstoffahrzeugen, z. B. zur Regelung von Gasmotoren oder Öl-/Gasbrennern.

Insbesondere Breitband-Lambda-Sonden sind modular aufgebaut und erlauben in Verbindung mit der Planartechnik die Integration mehrerer Funktionen. Sie weisen in der Regel Funktionsschichten auf, die aus einer porösen Schutzschicht, aus einer Aussenelektrode, einer Sensorfolie, einer Innenelektrode, einer Referenzluftkanalfolie, einer Isolationsschicht, einem Heizelement, einer Heizfolie, einem Widerstand bzw. einem Abgleichelement und Anschlusskontakten bestehen.

Da die Breitband-Lambda-Sonden aus der Kombination einer Nernet-Konzentrationszelle (=Sensorzelle) mit einer Sauerstoff-Ionen transportierenden Pumpzelle besteht, kann sie nicht nur im stöchiometrischen Punkt bei λ=1, sondern auch im mageren und fetten Bereich sehr exakt messen.

Jede Sonde ist individuell abzugleichen. Hierzu weist die Sonde einen eingebauten Widerstand ("Mini-Hybrid") auf. Der Abgleich, der vorzugsweise mittels einem Laserstrahl erfolgt, wird dadurch ausgeführt, dass die Widerstandsschicht, die sich auf einem Keramiksubstrat befindet, entsprechend abgetragen wird, wodurch eine Widerstandsänderung herbeigeführt wird und damit ein Abgleich erfolgt.

Eine Ausführungsform besteht darin, dass die Abgleicheinheit bzw. der Widerstand unmittelbar an der Sonde angeordnet ist. Ein weiteres Ausfürungsbeispiel besteht darin, dass der Widerstand ausserhalb, beispielsweise an einem mit der Sonde gekoppeltem Kabelbaumstecker untergebracht ist.

Bisher erfolgt der Abgleich dadurch, dass das Gehäuse des Kupplungssteckers, in dem der Widerstand eingebaut ist, ohne das Deckelelement zur Abgleichstelle transportiert wird. Nach der entsprechenden Laserbearbeitung für den Abgleich wurde dann im Anschluß an einer weiteren Montagestelle das Deckelelement aufgesteckt.

Um zu verhindern, dass Feuchtigkeit, Schmutz oder ähnliches in den Kupplungsstecker eindringt und um zu gewährleisten, dass die entsprechende Atmosphäre innerhalb des Kupplungssteckers herrscht, weist das Deckelelement zusätzliche Dichtungen auf. Ferner sind an dem Gehäuse des Kupplungssteckers Druckausgleichselemente angeordnet.

Die Dichtungen übernehmen jedoch nur dann ihre Funktion des Abdichtens, wenn das Deckelelement in seiner Endlage (Sekundärverriegelung) verrastet ist. Bei dem Transport des Kupplungssteckers zur Abgleichstelle ist das Deckelelement entweder noch vollständig entfernt oder es liegt auf dem Gehäuse des Kupplungssteckers auf, wobei dieses keine Verrastung mit dem Gehäuse eingegangen ist, da das Deckelelement zum Abgleichen des Abgleichelements nochmals entfernt werden muss. Daher besteht insbesondere bei dem Transport des Kupplungssteckers die Gefahr, dass Staub, Schmutz oder Feuchtigkeit in das Gehäuse eindringt und so die Funktion des Kupplunssteckers beeinträchtigt werden kann.

Durch die US-A-6132256 ist ein Lambda-Modul mit Kupplungsstecker für Lambda-Sonden von Katalysatoren bekannt. Der Kupplungsstecker besteht aus einem Gehäuse mit einem Grundkörper und einem Deckelelement. Elektrische Bauteile sind in das Gehäuse einlegbar und fixierbar. Ein Abgleichelement für eine Sonde ist vorhanden und wird über das Deckelelement abgedeckt. Dieses Deckelelement weist eine Primär- und Sekundärverriegelung auf. Eine Dichtung, die mit dem Deckelelement zusammenwirkt, weist Dichtlippen auf, die in der Vorraststellung des Deckelelements eine dichtende Verbindung mit dem Gehäuse eingehen. Diese Dichtung ist in nachteiliger Weise ein separates Bauteil, dessen getrennte Herstellung und Montage die Herstellkosten des Lambda-Moduls belastet.

### Aufgabe der Erfindung

Die Aufgabe der Erfindung besteht darin, eine Ausführungsform des Kupplungssteckers, der insbesondere für eine planare Breitband-Lambdasonde vorgesehen ist, derart weiterzubilden, dass diese sehr kostengünstig herstellbar ist und durch die Weiterbildung die Nachteile des Standes der Technik vermieden werden.

### Lösung der Aufgabe

Die Lösung der Aufgabe besteht darin, dass an dem Deckelelement eine Dichtung vorhanden ist, die mit dem Deckelelement fest verbunden ist. Dies hat den Vorteil, dass der erfindungsgemäße Kupplungsstecker nur wenige Bauteile aufweist und eine vereinfachte Handhabung ermöglicht. Hierdurch ist eine kostengünstige und effiziente Fertigung möglich.

Da der Grundkörper vollständig von dem Deckelelement umgeben ist, ist es in vorteilhafter Weise möglich, mittels Anordnung von Dichtlippen innerhalb des Deckelelements den Innenraum des Kupplungssteckers abzudichten, so dass dieser insbesondere vor Staub, Schmutz oder Spritzwasser bereits in der Vorraststellung des Deckelelements geschützt ist.

Zusätzlich unterstützt dies auch die Verrastung des Deckelelements an dem Grundkörper. Vorzugsweise ist eine Vor- und eine Endverrastung bzw. eine Primär- und eine Sekundärverriegelung vorgesehen. Diese ist derart ausgestaltet, dass das Deckelelement Rastarme aufweist, die sich im geschlossenen Zustand des Deckels an dem Grundkörper des Kupplungssteckers anlegen und dort mit Rastnasen eine Verrastung eingehen. In der Vorraststellung greifen die an der umlaufenden Dichtung des Deckelelements angeordneten Dichtlippen bereits in Ausnehmungen auf Seiten des Gehäuses ein und bilden somit einen Schutz zumindest gegen Staub und Schmutz. Durch ein weiteres Drücken des Deckelelements in Richtung des Gehäuses tritt beim Erreichen der Endlage (Sekundärverriegelung) die im Deckelelement angeordnete umlaufende Dichtung in Funktion und dichtet das Gehäuse gegen über dessen äusserer Umgebung vollständig ab. Vorzugsweise ist die Dichtung derart ausgelegt, dass das Gehäuse in der Endlage des Deckelelements wasserdicht ist. Die Dichtlippen treten in dieser Endlage ausser Funktion und sind nahezu vollständig in der Ausnehmung im Gehäuse untergebracht.

Ein weiterer Vorteil der Erfindung besteht darin, dass die zuvor genannte Dichtung an dem Deckelelement angespritzt werden kann, so dass diese unverlierbar angeordnet ist.

Vorteilhafterweise besteht das Deckelelement aus PBT (Polybutylenterephthalt) oder gleichwertigen Materialien.

Weitere vorteilhafte Ausgestaltungen gehen aus nachfolgenden Beschreibungen, den Ansprüchen und den Zeichnungen hervor.

Es zeigen:
- **Fig. 1**: Eine perspektivische Ansicht auf den erfindungsgemässen Kupplungsstecker, mit einem Deckelelement in Endlage;
- **Fig. 2**: eine perspektivische Ansicht auf den erfindungsgemässen Kupplungsstecker, ohne Deckelelement;
- **Fig. 3**: einen Längsschnitt durch den Kupplungsstecker gemäss Fig. 1;
- **Fig. 4**: eine Detaildarstellung von Fig. 3, wobei die Funktion des Deckelelements zusammen mit Dichtung und Dichtlippen im Schnitt dargestellt ist und das Deckelelement sich in einer Vorraststellung befindet;
- **Fig. 5**: eine Detaildarstellung von Fig. 3, wobei die Funktion des Deckelelements zusammen mit Dichtung und Dichtlippen im Schnitt dargestellt ist und das Deckelelement sich in einer Endlage befindet.

### Beschreibung eines Ausführungsbeispiels

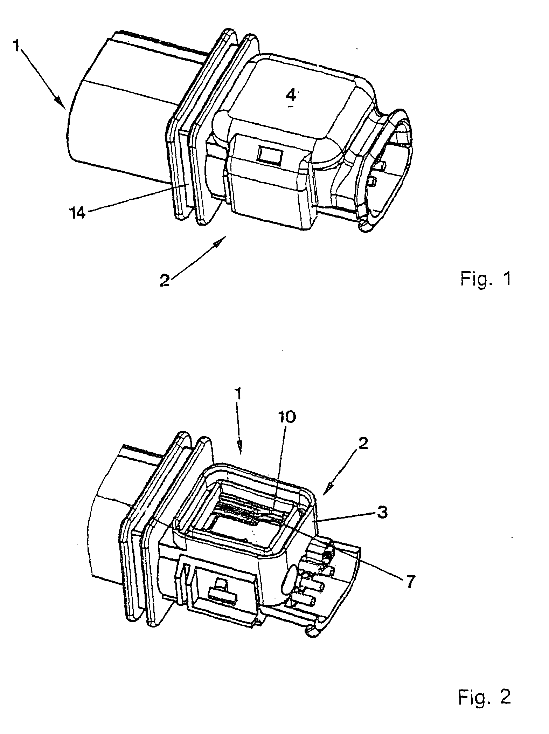

Bei dem in den Fig. 1 bis 5 dargestellte Kupplungsstecker 1 handelt es sich um einen solchen Stecker, der aus einem Gehäuse 2 besteht, das sich aus einem Grundkörper 3 und einem Deckelelement 4 zusammensetzt.

Auf dem Grundkörper 3 ist in einer Haltevorrichtung 5 eine Abgleicheinheit 6 angeordnet, die wiederum über elektrische Kontaktelemente 7 mit der über ein Verbindungselement 8 verbundenen Lambda-Sonde bzw. mit dem über den in den Kupplungsstecker 1 eingefügten und in den Zeichnungen nicht näher dargestellten Stecker in Verbindung steht.

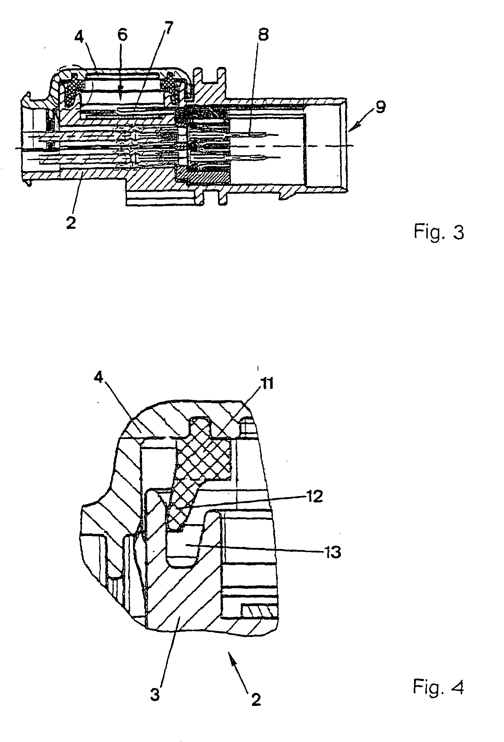

Die elektrischen Kontaktelemente 7 bestehen aus leiterbahnähnlich geformten Metallstreifen, die im Bereich der Kupplungsmöglichkeit 9 (Fig. 4) des Kupplungssteckers 1 mit ihrer einen Seite enden.

Die Abgleicheinheit 6 wird über Führungselemente 10, die zum grössten Teil an dem Grundkörper 3 angeordnet sind, geführt und durch die elektrischen Kontaktelemente 7 positionsgerecht gehalten.

Das Deckelelement 4 weist auf seiner Innenseite eine umlaufende Dichtung 11 auf, die im montierten Zustand des Deckelelements 4 mit dem Gehäuse korrespondiert. Zusätzlich sind vom Deckelelement 4 wegweisend an der Dichtung 11 Dichtlippen 12 angeordnet. Diese Dichtlippen 12 verjüngen sich zu deren Ende hin. Die Länge der Dichtlippen 12 ist derart bemessen, dass bei aufgesetztem Deckelelement 4 auf dem Gehäuse 2 in der in Fig. 4 dargestellten Vorraststellung diese in Ausnehmungen 13 hineinreichen, so dass eine Abdichtung des Gehäuses 2 hergestellt wird.

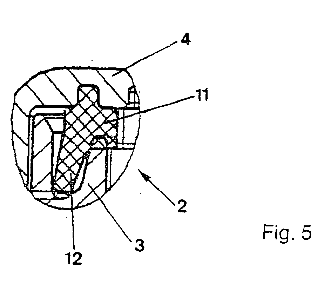

Durch Herbeiführung der Endlage des Deckelelements 4, wie es in Fig. 5 dargestellt ist, wird bewirkt, dass die Dichtlippen 12 weiter in die Ausnehmungen 13 gedrückt werden und die eigentliche Abdichtung zwischen der umlaufenden Dichtung 11 und dem Gehäuse 2 herbeigeführt wird.

Vorteilhafterweise bilden Dichtung 11 und Dichtlippen 12 ein einstückiges Teil und sind unverlierbar an der Innenseite des Deckelelements 4 angespritzt.

Vorzugsweise weist der Kupplungsstecker 1 an seinem Umfang Nuten 14 auf, die es erlauben, einen Kupplungsstecker 1 in dafür vorgesehene Halter einzufügen.

Aufgrund seiner geringen äusseren Masse ist es auch möglich, den Kupplungsstecker in einem Rillenrohr unterzubringen.

## Patentansprüche

1. Kupplungsstecker (1), insbesondere für eine planare Lambda-Sonde, bestehend aus einem Gehäuse (2), nämlich einem Grundkörper (3) und einem Deckelelement (4) sowie elektrischen Bauteilen, die in das Gehäuse (2) einlegbar und fixierbar sind, und einem Abgleichelement (6) für eine Sonde, insbesondere eine planare Breitband-Lambdasonde, die in dem Kupplungsstecker (1) oder über ein weiteres Kontaktelement außerhalb des Kupplungssteckers (1) anzubringen ist, wobei das Deckelelement (4) über dem Abgleichelement (6) aufsteckbar ist und eine Primär- (Vorraststellung) und eine mit dem Deckelelement (4) zusammenwirkende Sekundärverriegelung (Endlage) aufweist, wobei an dem Deckelelement (4) eine Dichtung (11) anlegbar ist, die von dem Deckelelement (4) wegweisende Dichtlippen (12) aufweist, die in der Vorraststellung des Deckelelements (4) eine dichtende Verbindung mit dem Gehäuse (2) eingehen, **dadurch gekennzeichnet, dass** die Dichtung (11) mit dem Deckelelement (4) fest verbunden ist.

2. Kupplungsstecker nach Anspruch 1, **dadurch gekennzeichnet, dass** die Dichtung (11) an das Deckelelement (4) angespritzt ist.

3. Kupplungsstecker nach Anspruch 1 oder 2, **dadurch gekennzeichnet, dass** die Dichtlippen (12) mit der übrigen Dichtung (11) ein einstückiges Teil bilden.

4. Kupplungsstecker nach Anspruch 1 oder 2, **dadurch gekennzeichnet, dass** Dichtung (11) und Dichtlippen (12) aus unterschiedlichen Materialien bestehen.

5. Kupplungsstecker nach mindestens einem der vorhergehenden Ansprüche, **dadurch gekennzeichnet, dass** in der Vorraststellung des Deckelelements (4) die Dichtlippen (12) in eine im Gehäuse (2) vorgesehene Ausnehmung (13) eintauchen und sich an die Wandung der Ausnehmung (13) anlehnen und so das Gehäuse (2) abdichten.

6. Kupplungsstecker nach mindestens einem der vorhergehenden Ansprüche, **dadurch gekennzeichnet, dass** in der Endlage des Deckelelements (4) die Dichtlippen (12) in der im Gehäuse (2) vorgesehenen Ausnehmung (13) nahezu vollständig aufgenommen werden und die Dichtung (11) selbst das Gehäuse (2) vollständig abdichtet.

## Claims

1. Coupler plug (1), in particular for a planar lambda probe, comprising a housing (2), that is to say a base body (3) and a cover element (4) as well as electrical components which can be installed and fixed in the housing (2), and a compensating element (6) for a probe, in particular a planar broadband lambda probe, which can be fitted in the coupler plug (1) or, by means of a further contact element, outside the coupler plug (1), it being possible for the cover element (4) to be plugged on over the compensating element (6), and said cover element (4) having a primary lock (pre-latching position) and a secondary lock (end position) which interacts with the cover element (4), it being possible for a seal (11) to be placed on the cover element (4), said seal having sealing lips (12), which point away from the cover element (4) and enter into a sealing connection with the housing (2) in the pre-latching position of the cover element (4), **characterized in that** the seal (11) is fixedly connected to the cover element (4).

2. Coupler plug according to Claim 1, **characterized in that** the seal (11) is injection-moulded onto the cover element (4).

3. Coupler plug according to Claim 1 or 2, **characterized in that** the sealing lips (12) form an integral part with the remainder of the seal (11).

4. Coupler plug according to Claim 1 or 2, **characterized in that** the seal (11) and the sealing lips (12) are made of different materials.

5. Coupler plug according to at least one of the preceding claims, **characterized in that**, in the pre-latching position of the cover element (4), the sealing lips (12) enter a recess (13) provided in the housing (2), and rest against the wall of the recess (13) and thus seal the housing (2).

6. Coupler plug according to at least one of the preceding claims, **characterized in that**, in the end position of the cover element (4), the sealing lips (12) are almost completely accommodated in the recess (13) provided in the housing (2), and the seal (11) itself completely seals the housing (2).

## Revendications

1. Fiche de couplage (1) destinée notamment à une sonde lambda plane, et composée d'un boîtier (2) à savoir un corps de base (3), un couvercle (4) et des composants électriques qui peuvent être introduits et fixés dans le boîtier, et d'un organe d'équilibrage (6) pour une sonde, notamment une sonde lambda plane à large bande, qui doit être montée dans la fiche de couplage (1) ou à l'extérieur de cette fiche (1) par l'intermédiaire d'un autre élément de contact, le couvercle (4), qui peut être emmanché sur l'élément d'équilibrage (6), présentant une position de verrouillage primaire (position de préblocage) et une position de verrouillage secondaire (position finale), un joint d'étanchéité (11) pouvant être monté sur l'élément de couverture (4) en étant éloigné de celui-ci par des lèvres d'étanchéité qui, dans la position de préblocage du couvercle (4) établissent une liaison étanche avec le boîtier (2),
**caractérisée en ce que**
le joint d'étanchéité (11) est solidaire du couvercle (4).

2. Fiche de couplage selon la revendication 1.
**caractérisée en ce que**
le joint d'étanchéité (11) est injecté sur le couvercle (4).

3. Fiche de couplage selon la revendication 1 ou 2,
**caractérisée en ce que**
les lèvres d'étanchéité (12) forment une seule pièce avec le reste du joint (11).

4. Fiche de couplage selon la revendication 1 ou 2,
**caractérisée en ce que**
le joint d'étanchéité (11) et les lèvres d'étanchéité (12) sont faits de matériaux différents.

5. Fiche de couplage selon au moins une des revendications précédentes,
**caractérisée en ce que**
dans la position de préblocage du couvercle (4) les lèvres d'étanchéité (12) plongent dans un évidement (13) prévu dans le boîtier (2) en s'appliquant le long de la paroi de cet évidement pour ainsi rendre étanche le boîtier (2).

6. Fiche de couplage selon au moins une des revendications précédentes,
**caractérisée en ce que**
quand le couvercle (4) occupe sa position finale, les lèvres d'étanchéité (12) sont à peu près totalement logées dans l'évidement (13) prévu dans le boîtier (2) et le joint lui-même (11) rend totalement étanche le boîtier (2).
